# FASCICULE DE BREVET EUROPEEN

(11) **EP 2 217 959 B1**
(45) Date de publication et mention de la délivrance du brevet: **21.06.2017**
(21) Numéro de dépôt: 08860618.1
(22) Date de dépôt: 10.12.2008
(51) Int. Cl.: G02B 23/06

(54) **TELESCOPE D'IMAGERIE STEREOSCOPIQUE COMPACT**
STEREOSKOPISCH ABBILDENDES KOMPAKTES TELESKOP
COMPACT STEREOSCOPIC IMAGING TELESCOPE

(30) Priorité: 11.12.2007 FR 0708622
(43) Date de publication de la demande: 18.08.2010
(73) Titulaire: Thales, 92400 Courbevoie (FR)
(72) Inventeur: BLANC, Jean-François, 06210 Mandelieu (FR); GARIN, Stéphane, 06550 La Roquette sur Siagne (FR)
(74) Mandataire: Esselin, Sophie
(86) Numéro de dépôt international: PCT/EP2008/067169
(87) Numéro de publication internationale: WO 2009/074596

(56) Documents cités:
- US-A1- 2007 109 637
- US-B1- 7 031 059
- US-B2- 7 119 954
- DATABASE INSPEC [Online] THE INSTITUTION OF ELECTRICAL ENGINEERS, STEVENAGE, GB; 2004, LAMARD J -L ET AL: "Design of the high resolution optical instrument for the Pleiades HR Earth observation satellites" XP002491357 Database accession no. 8199739 & 5TH INTERNATIONAL CONFERENCE ON SPACE OPTICS (ICSO 2004) 30 MARCH-2 APRIL 2004 TOULOUSE, FRANCE, 2004, pages 149-156, 5th International Conference on Space Optics (ICSO 2004) ESA Noordwijk, Netherlands ISBN: 92-9092-865-4

## Description

La présente invention se rapporte à un dispositif d'imagerie stéréoscopique compact, et en particulier à un dispositif adapté aux satellites d'observation pour lesquels la masse, l'encombrement et la fiabilité sont des paramètres critiques, en particulier en termes des performances de durée de vie et d'agilité.

On connait d'après le document US 2007/109637 un système d'imagerie stéréoscopique, avec un ou deux télescopes. La stéréoscopie est réalisée avec un seul détecteur. Cela implique la présence d'un mécanisme d'obturation, dit « shutter », afin d'éclairer le détecteur successivement par la même scène : une fois via la première voie optique, l'autre fois via la seconde. Cette solution n'est pas adaptée aux satellites d'observation. En effet, ces derniers nécessitent une grande fiabilité sur des durées de vie élevées, généralement de 5 à 10 ans. Aussi, l'utilisation de mécanisme de type « shutter » est généralement proscrite.

Le document US 7 031 059 propose un télescope de tête unique à deux branches optiques. La stéréoscopie est réalisée soit avec deux plans focaux séparés soit avec un seul plan focal de grandes dimensions. En effet pour ce dernier cas, l'axe optique des deux voies optiques assurant la stéréoscopie est identique, et en conséquence l'écartement des deux lignes de détection est dans le ratio de l'angle stéréoscopique.

Le document US 7 119 954 traite de la stéréoscopie avec deux télescopes de tête différents. L'angle de stéréoscopie peut être important, mais il nécessite un dispositif de recombinaison/registration des télescopes.

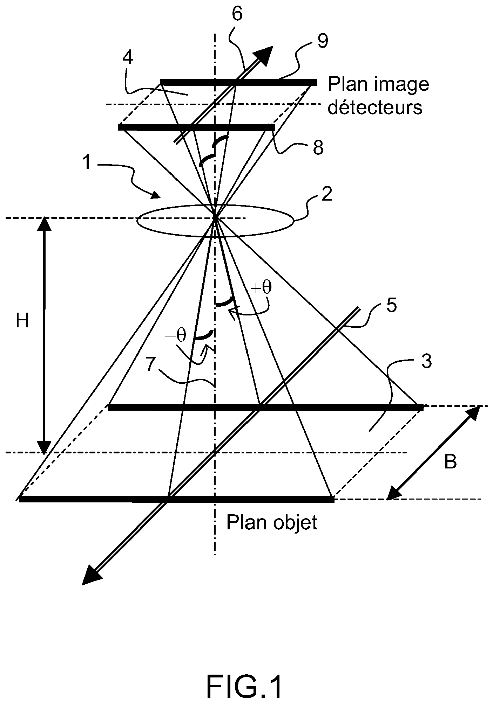

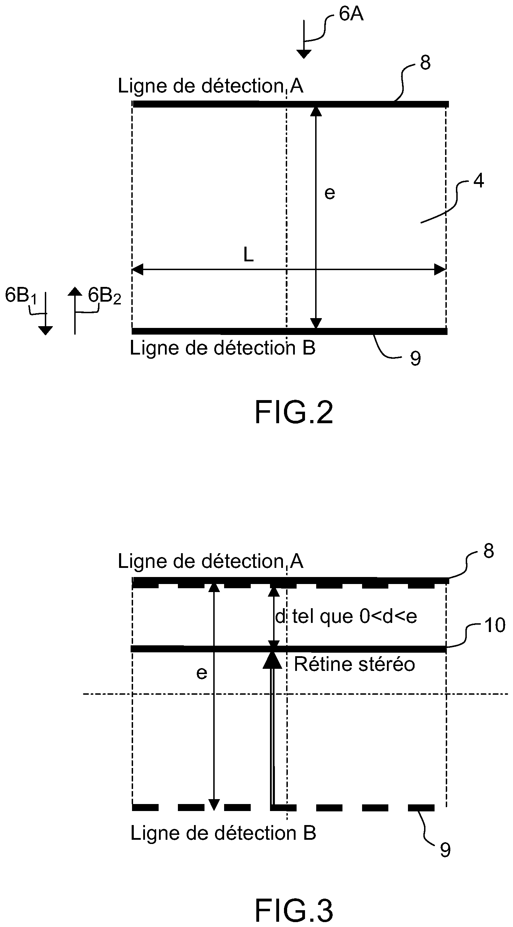

On a schématisé en figure 1 un instrument optique imageur classique 1. Cet instrument comprend une optique de focalisation 2 disposée entre un plan objet 3 et un plan image 4 sur lequel il forme l'image du plan 3. Le plan objet est, dans l'exemple représenté, une bande de terrain qui est balayée, dans le plan objet 3, selon la direction de la flèche 5, et dans le plan image selon la flèche 6. L'optique 2 est à une distance H du plan objet et son axe optique est référencé 7. Pour réaliser une prise de vues stéréoscopique, deux lignes de détection ou rétines 8, 9 sont disposées dans le plan image 4, perpendiculairement à la direction de balayage 6. La distance entre les lignes 8 et 9 est notée « e » (figure 2), et elle correspond, dans le plan objet, à une largeur de terrain (largeur mesurée parallèlement à la direction 5) égale à B. La longueur de chacune des lignes 8 et 9 (identiques entre elles) est notée L. Sur cette figure 2, on a noté par des flèches 6A et 6B1 (ou 6B2) les sens de défilement des images sur les lignes de détection 8 et 9 respectivement. On remarquera que, suivant l'architecture optique choisie, le sens de défilement de l'image sur la ligne de détection B peut être inversé ou non (flèche 6B2 ou 6B1) par rapport au sens de défilement de l'image sur la ligne de détection A.

Un instrument optique imageur classique accepte un champ plus ou moins étendu suivant la performance requise. Il permet donc d'intégrer en théorie une voie nominale et une voie stéréoscopique avec un rapport B/H qui est fonction du champ acceptable. Le rapport B/H est lié avec le demi-angle de séparation des voies θ par la relation : Tan θ = B/(2H)

Pour présenter un intérêt de reconstitution d'images en relief, le rapport B/H doit être supérieur à 0,01 environ, soit un angle stéréoscopique θ supérieur à 0,25° environ (θ étant le demi-angle sous lequel est vue la portion de terrain de largeur B).

L'écart e entre les lignes de détection est fonction de la longueur focale de l'instrument f et il est exprimé par la relation : e = 2.f.tan θ = f . B/H

Pour les imageurs à haute résolution, les longueurs focales sont très grandes, et il en est de même pour l'écart e entre les lignes de détection.

Par exemple, pour une focale de 20 000 mm et un rapport B/H de 0.02, cet écart vaut 400 mm. De manière plus générale, pour les télescopes, le champ étant de révolution, l'écartement maximal des lignes de détection est voisin de leur longueur : e∼L, ce qui rend l'instrument d'imagerie très encombrant. Les solutions actuelles utilisent une architecture à plusieurs plans focaux ou avec des écartements de rétines homothétiques du rapport B/H, l'écartement des deux lignes détection atteint des dimensions voisines des longueurs de rétines : 200 à 1000 mm suivant les applications.

La présente invention a pour objet un dispositif d'imagerie stéréoscopique qui soit compact, sans toutefois que sa compacité diminue ses qualités stéréoscopiques, et ayant une grande fiabilité sur des durées de vie élevées.

Le dispositif d'imagerie stéréoscopique conforme à l'invention est un dispositif comportant les caractéristiques de la revendication 1. Ainsi, le dispositif de l'invention est constitué d'un télescope de tête unique avec deux voies optiques assurant la stéréoscopie, ces deux voies ayant leur axe optique dissocié afin d'aboutir à deux plans images coplanaires. L'écart entre les lignes de détection est minimisé pour limiter l'encombrement du plan focal et sa masse. On notera que la deuxième ligne de détection peut aussi servir de redondance à la première pour les prises de vue dans une mode qui n'est pas conforme à l'invention. La présente invention sera mieux comprise à la lecture de la description détaillée d'un mode de réalisation, pris à titre d'exemple non limitatif et illustré par les dessins annexés, sur lequel :
- les figures 1 et 2, déjà décrites ci-dessus, sont des schémas simplifiés montrant les relations établies entre les différents paramètres d'un instrument d'imagerie classique,
- la figure 3 est un diagramme du plan image d'un instrument d'imagerie, montrant les positions respectives des deux lignes de détection d'un instrument d'imagerie conforme à l'invention,
- les figures 4 à 7 sont des schémas, en coupe selon l'axe optique, de plusieurs modes de réalisation d'un instrument d'imagerie conforme à l'invention,
- la figure 8 est un diagramme relatif à la stéréoscopie pluri-focale dans les plans image et objet d'un instrument d'imagerie conforme à l'invention, et
- les figures 9 à 12 sont des schémas en coupe selon l'axe optique, d'autres modes de réalisation d'un instrument d'imagerie.

Sur le schéma de la figure 3, similaire à celui de la figure 2, on a représenté en traits interrompus les positions respectives des lignes de détection 8 et 9 d'un dispositif d'imagerie de l'art antérieur, et en traits continus gras les positions respectives des deux lignes de détection 8 (à la même position que selon l'art antérieur) et 10 (plus rapprochée de la position 8 que dans l'art antérieur). La distance entre les positions 8 et 10 est notée d et elle est telle que 0≤d<e.

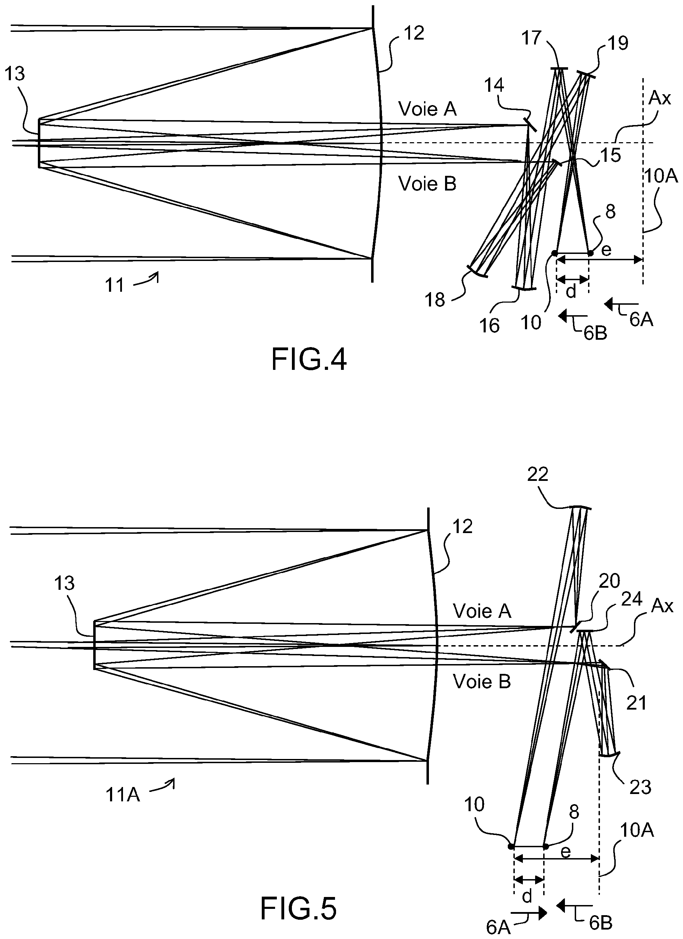

On a représenté en figures 4 et 5 deux exemples de réalisation d'un télescope à système optique de type Korsch à deux lignes de détection rapprochées de la façon schématisée en figure 3. Sur ces figures, comme sur toutes les suivantes, on a noté par des flèches 6A et 6B les sens de défilement des images sur les lignes de détection 8 et 10 respectivement.

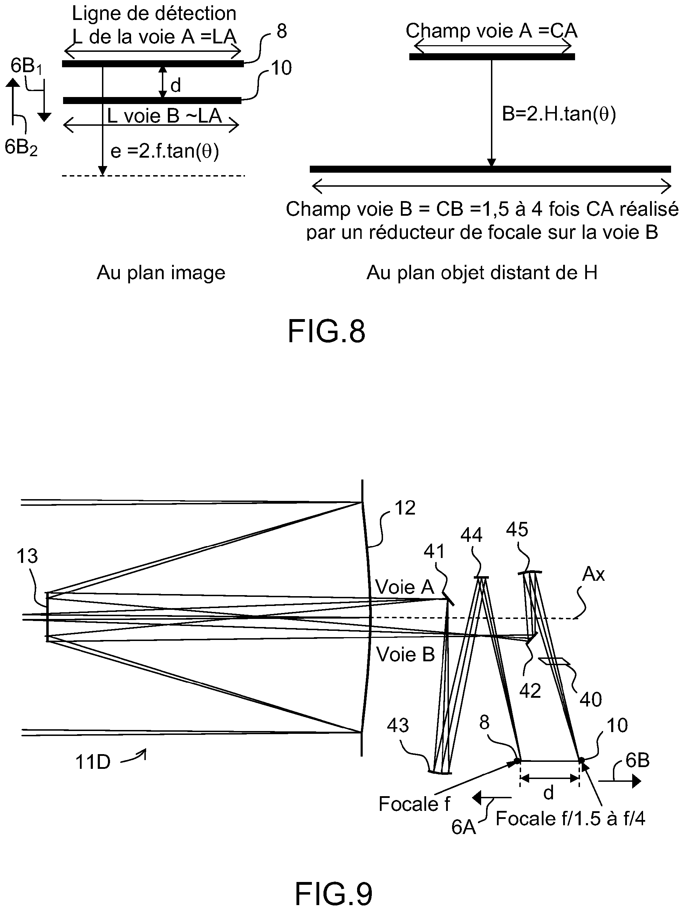

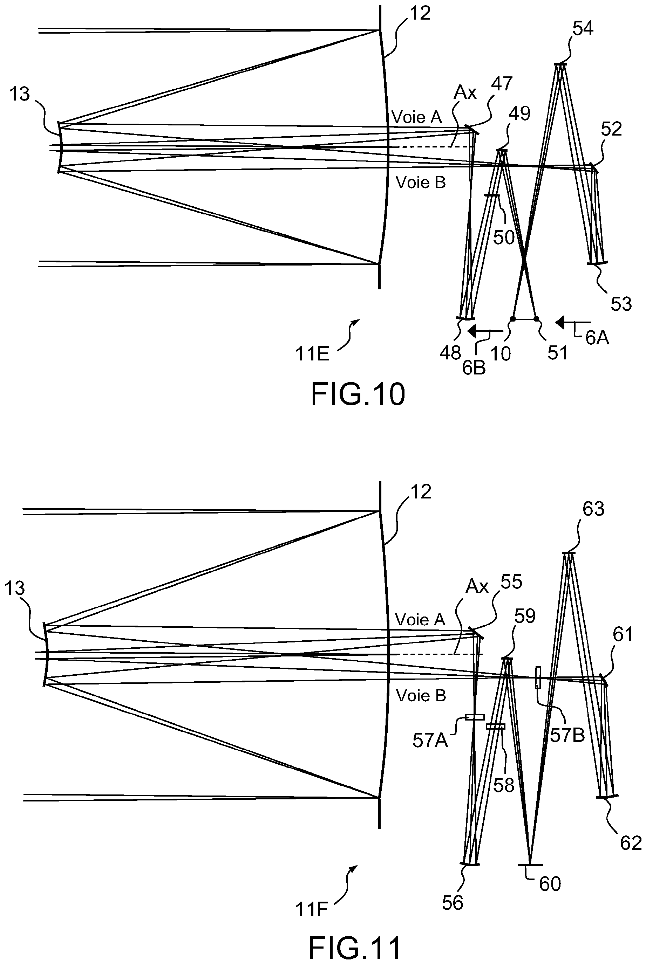

Ces deux figures 4 et 5 se rapportent au cas où le rapport B/H est égal à 0,015. Il est bien entendu que l'invention n'est pas limitée à ce type de télescope, et qu'elle peut être mise en oeuvre avec d'autres types de télescopes. Sur ces deux figures, comme sur les figures 9 et 10, les deux plans de deux lignes de détection 8 et 10 sont coplanaires, mais ils ne sont pas nécessairement confondus.

En figure 4, le télescope 11, dont l'axe optique du miroir primaire est référencé Ax, comporte un premier miroir (miroir primaire) asphérique concave (parabolique dans le cas présent) 12 renvoyant les faisceaux incidents (arrivant sur le miroir 12 dans la direction de la flèche marquée I sur la figure) vers un deuxième miroir parabolique convexe 13 (miroir secondaire). Le miroir 13 renvoie ces faisceaux, qui sont des faisceaux convergents et qui correspondent chacun à une voie d'acquisition, sur deux miroirs plans 14, 15 disposés à proximité des points de convergence des faisceaux respectifs. Le miroir 14 renvoie les faisceaux d'une première voie incidente (désignée voie A) vers le miroir asphérique 16 (appelé aussi miroir tertiaire dans un télescope Korsch), suivi d'encore un autre miroir plan 17. Ce dernier miroir 17 renvoie les faisceaux qu'il reçoit vers la ligne de détection 8 (qui s'étend perpendiculairement au plan du dessin). Le miroir 15 renvoie les faisceaux d'une deuxième voie incidente (désignée voie B) vers un autre miroir asphérique 18, suivi d'encore un autre miroir plan 19. Ce dernier miroir 19 renvoie les faisceaux qu'il reçoit vers la ligne de détection 10 (qui s'étend également perpendiculairement au plan du dessin). L'ensemble des miroirs 14, 16 et 17 constitue une première branche optique (voie A) du télescope 11, tandis que l'ensemble des miroirs 15 et 18, 19 constitue la deuxième branche optique (voie B) du télescope. Ces deux branches sont disposées de façon à replier en « Z » les faisceaux des voies A et B dans un volume le plus petit possible autour de l'axe Ax et pour que les faisceaux focalisent sur les lignes détection 8 et 10 (distantes d'une distance d inférieure à la distance e, comme schématisé en figure 3).Ce qui est possible grâce à la division du schéma optique en deux parties en aval du miroir 13 (appelé miroir secondaire dans un télescope Korsch) et grâce à la dissociation des axes optiques des deux voies optiques : voie A et voie B par un positionnement adapté des miroirs plans. Sur cette figure 4, on a représenté par une ligne interrompue 10A la position qu'aurait occupée la ligne de détection 10 si elle avait été distante de la valeur e par rapport à la ligne de détection 8. Les miroirs 18,16 sont asphériques, les miroirs 14,15,17,19 sont plans.

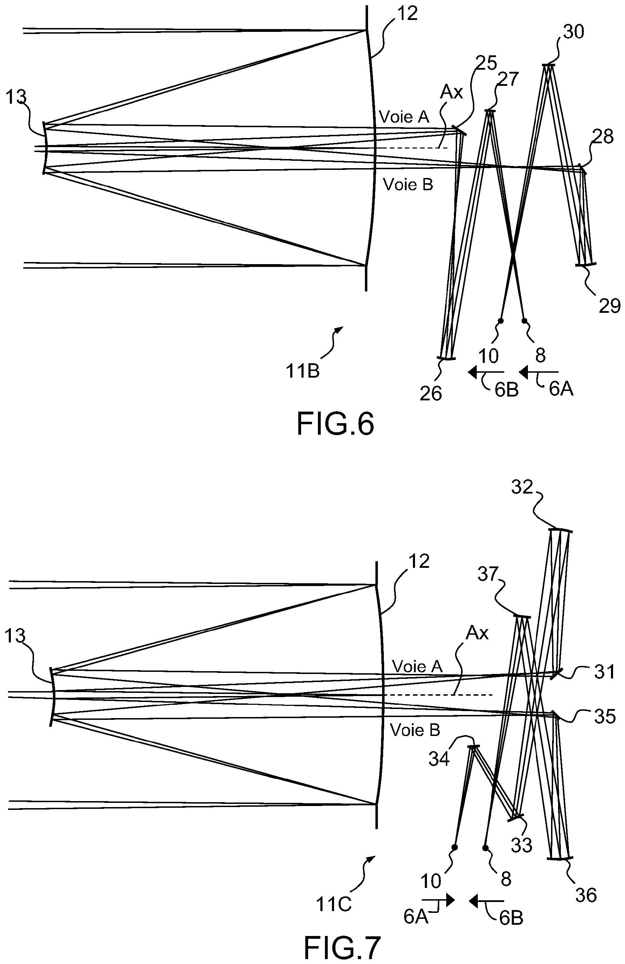

On a représenté en figure 5 une variante 11A du télescope 11 de la figure 4. Sur cette figure 5, de même que sur les figures 6, 7, et 9 à 12, les mêmes éléments que ceux de la figure 4 sont affectés des mêmes références numériques. Alors que dans le télescope de la figure 4, les faisceaux des voies A et B étaient renvoyés par les miroirs 14 et 15, puis par les miroirs 16 et 18 et enfin par les miroirs 17 et 19, tous les deux sensiblement dans la même direction par rapport à l'axe optique Ax, dans le télescope 11A de la figure 5, les deux premiers miroirs 20 et 21 qu'ils rencontrent après réflexion sur le miroir secondaire 13 sont disposés de façon à les renvoyer dans des directions sensiblement opposées sur des miroirs 22, 23 respectivement. Après réflexion sur le miroir 22, le faisceau de la voie A arrive directement sur la ligne de détection 8. Le faisceau de la voie B, après réflexion sur le miroir 23, est renvoyé sur un autre miroir 24 qui le renvoie à son tour vers la ligne de détection 10. Les miroirs 22, 23 sont asphériques, les miroirs 20, 21,24 sont plans.

Pour la variante 11B de télescope de l'invention représentée en figure 6, les faisceaux de la voie A sont respectivement réfléchis par un premier miroir plan 25, puis par un miroir asphérique 26 et enfin par un second miroir plan 27 pour converger sur la ligne de détection 8. Les miroirs 25 et 27 sont disposés du même côté de l'axe Ax que la voie A (tels que considérés sur la vue en coupe), tandis que le miroir 26 est disposé du même côté que la voie B par rapport à l'axe Ax. De façon similaire, les faisceaux de la voie B sont réfléchis par un premier miroir plan 28, puis par un miroir asphérique 29 et enfin par un miroir plan 30 pour être focalisés sur la ligne de détecteurs 10. Les miroirs 28 et 29 sont disposés du même côté de l'axe Ax que la voie B, tandis que le miroir 30 est disposé du même côté que la voie A par rapport à l'axe Ax.

Pour la variante 11C de télescope de l'invention représentée en figure 7, les faisceaux de la voie A sont respectivement réfléchis par un premier miroir plan 31, puis par un miroir asphérique 32 par un deuxième miroir plan 33 et enfin par un troisième miroir plan 34 pour converger sur la ligne de détection 8. Les miroirs 31 et 32 sont disposés du même côté de l'axe Ax que la voie A (tels que considérés sur la vue en coupe), tandis que les miroirs 33 et 34 sont disposés du même côté que la voie B par rapport à l'axe Ax. Les faisceaux de la voie B sont réfléchis par un premier miroir plan 35, puis par un miroir asphérique 36 et enfin par un miroir plan 37 pour être focalisés sur la ligne de détecteurs 10.

Sur le schéma de la figure 8, on a représenté à gauche le plan image et à droite le plan objet. Dans le plan image, la rétine comporte deux lignes de détection 8 et 10, distantes d'une distance d, inférieure à la distance e (celle des dispositifs de l'art antérieur, telle que : e=2f tan θ) ou même nulle (s'il n'y a qu'une ligne de détection unique, comme l'exemple de la figure 11). Ces lignes de détection peuvent être de longueurs égales ou non. Dans l'exemple schématisé, la ligne de la voie A a une longueur égale à LA, et celle de la voie B a pratiquement la même longueur.

Dans le plan objet, dont la distance au plan image est égale à H, la largeur du champ vu par la voie A est CA, et celle du champ vu par la voie B est CB. Grâce à l'interposition d'un réducteur de focale sur la voie B, comme expliqué ci-dessous, la longueur CB est supérieure à CA. De façon avantageuse, CB vaut environ de 1,5 à 4 fois CA.

Selon une autre caractéristique de l'invention, les champs des prises de vues peuvent être différents pour les deux voies d'acquisition. Habituellement, on obtient un champ de largeur double en doublant la longueur de la rétine, ce qui a pour effet d'augmenter les dimensions du plan focal ainsi que le nombre de données à stocker et à transmettre. Selon l'invention, on évite ces inconvénients grâce à l'interposition d'un dispositif réducteur de focale sur l'une des deux voies, par exemple la voie B, comme dans les exemples représentés en figures 9 et 10. La diminution de résolution de la voie B liée à la diminution de focale peut être compensée si besoin en utilisant sur la ligne de détection B, des détecteurs à pixels plus petit ou des pixels en quinconces permettant sur-échantillonnages spatial.

L'adjonction d'un réducteur de focale sur une des deux branches optiques est une variante permettant de réaliser avec deux ou une seule ligne de détection des missions champ large, champ étroit et stéréoscopique

On a schématisé en figure 9 un télescope 11D, comportant les mêmes miroirs primaire et secondaire que ceux des figures 4 à 7, et deux branches optiques (voie A et voie B) disposées à peu près de la même façon que ceux des figures 4 à 7, dont l'une (voie B) incorpore un réducteur de focale fixe 40. Sur cette figure, les mêmes éléments que ceux des figures 4 à 7 sont affectés des mêmes références numériques. En aval du miroir secondaire 13, on dispose sur la voie A un miroir 41 et sur la voie B un miroir 42. Le miroir 41 est suivi des miroirs 43 et 44, et le miroir 42 est suivi d'un seul miroir 45. La voie A est focalisée sur la ligne de détection 8, tandis que la voie B est focalisée sur la ligne 10 dont la distance d à la ligne 8 est fonction de la disposition respective des miroirs 41 à 45, et est inférieure à la distance e des dispositifs de l'art antérieur, comme schématisé sur la partie gauche de la figure 8. Tous les miroirs 41,44 et 42 sont plans ; les miroirs 43 et 45 sont asphériques.

Pour le télescope 11E représenté en figure 10, les faisceaux de la voie A sont respectivement réfléchis par un premier miroir plan 47, puis par un miroir asphérique 48 et par un deuxième miroir plan 49, un dispositif 50 de réduction de focale étant interposé sur le trajet des faisceaux lumineux entre les miroirs 48 et 49. Les faisceaux issus du miroir 49 convergent sur la ligne de détection 51. Les miroirs 48 et 49 sont disposés du même côté de l'axe Ax que la voie B (tels que considérés sur la vue en coupe), tandis que le miroir 47 est disposé du même côté que la voie A par rapport à l'axe Ax. Les faisceaux de la voie B sont réfléchis par un premier miroir plan 52, puis par un miroir asphérique 53 et enfin par un miroir plan 54 pour être focalisés sur la ligne de détecteurs 10. Les miroirs 52 et 53 sont disposés du même côté de l'axe Ax que la voie B, tandis que le miroir 54 est disposé du même côté que la voie A par rapport à l'axe Ax.

Le télescope 11F représenté en figure 11 est une variante pas conforme à l'invention du schéma figure 10. Les faisceaux de la voie A sont réfléchis par un premier miroir plan 55 vers un miroir asphérique 56, un « obturateur » 57A étant interposé sur le trajet de ces faisceaux entre les miroirs 55 et 56. Les faisceaux réfléchis par le miroir 56 passent par un réducteur de focale 58 et sont réfléchis par un deuxième miroir plan 59 vers une ligne de détection unique 60. Les faisceaux de la voie B passent par un deuxième « obturateur » 57B, sont réfléchis par un premier miroir plan 61 vers un miroir asphérique 62 vers un second miroir plan 63 pour être focalisés sur la ligne de détection 60.

Les deux «obturateurs» 57A, 57B, placés au voisinage des plans focaux intermédiaires permettent de sélectionner la voie A (voie champ large) ou la voie B (voie champ étroit) suivant le besoin. Ces obturateurs peuvent aussi avoir comme fonction de masquer toute entrée de lumière indésirable, en particulier des éclairements solaires.

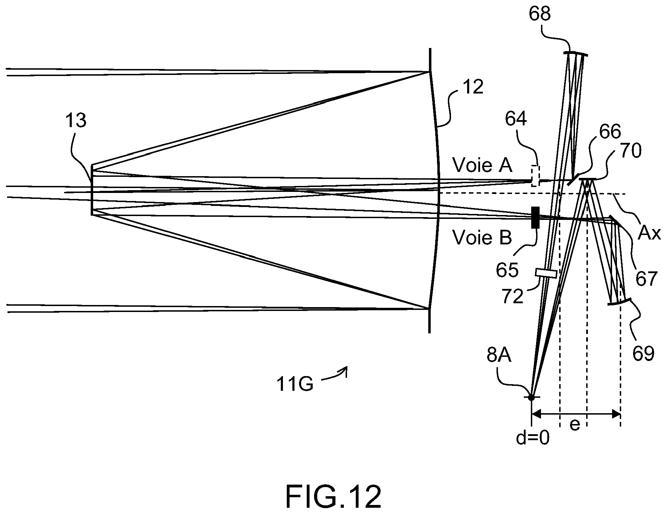

Dans le télescope 11G de la figure 12, qui a une configuration similaire à celle du télescope 11A de la figure 5 mais ne conforme pas a l'invention, on interpose sur chacune des deux voies A et B, en amont du point de convergence des faisceaux de ces voies, un obturateur, respectivement 64, 65. Comme dans le cas du télescope 11A de la figure 5, les faisceaux des deux voies A et B du télescope 11G sont renvoyés dans des directions sensiblement opposées par des miroirs 66, 67 respectivement. Le faisceau de la voie A, après réflexion sur le miroir 66, arrive sur un miroir 68 qui le réfléchit pour le focaliser sur la ligne de détection barrette unique 8A, située par exemple au même emplacement que la ligne de détection barrette 8 de la figure 5. Un dispositif 72 de réduction de focale est interposé sur le trajet des faisceaux lumineux entre le miroir 68 et le plan focal. Le faisceau de la voie B, après réflexion sur le miroir 67, arrive sur un miroir 69 qui le réfléchit vers un autre miroir 70, pour le focaliser sur la même ligne de détection barrette unique 8A. Les miroirs 69 et 70 ont des positions légèrement différentes de celles des miroirs 23, 24 de la figure 5, respectivement, afin de diriger la zone de focalisation du faisceau de la voie B vers la ligne de détection barrette unique 8A. Les miroirs 68, 69 sont asphériques, les miroirs 66,67 et 70 sont plans.

En résumé, l'invention permet de réaliser un dispositif d'imagerie stéréoscopique compact. Sa principale caractéristique consiste à rapprocher, sur un télescope de tête unique, les deux lignes de détection dédiées à la prise de vues stéréoscopique tout en conservant un angle stéréoscopique important (limité par le télescope de tête). Une variante consiste à interposer un réducteur de focale sur une des deux voies optiques. Elle permet, dans des modes pas conformes à l'invention et en plus de la capacité stéréoscopique, de réaliser des prises de vue grand champ ou à champ étroit avec un seul plan focal équipé de deux ou une ligne de détection.

Cette invention est particulièrement adaptée aux satellites d'observation pour lesquels la masse, l'encombrement et la fiabilité sont des paramètres critiques, en particulier en termes de performances de durée de vie et d'agilité.

Différents schémas optiques sont donnés en exemple; ils ne sont pas exhaustifs. Ils proposent des paramétrages différents du dispositif d'imagerie tels que : l'écartement entre les deux lignes de détection, le sens de défilement des images sur chaque ligne de détection, l'incidence des faisceaux optiques au plan focal, le nombre de miroirs, l'aménagement des principaux éléments :miroirs et plan focal, , la position des plans images intermédiaires, la position des pupilles de sortie... Enfin, ce dispositif d'imagerie s'adapte à tout type de plans focaux : monospectral ou multi-spectral ; à plat ou à miroirs et à tout type de détecteur : barrettes simple, barrettes TDI, matrices etc.

## Revendications

1. Dispositif d'imagerie stéréoscopique compact comportant un dispositif optique de formation d'image et un dispositif de détection optoélectronique ayant deux lignes de détection disposées dans le plan image du dispositif optique, ce dispositif optique comportant un télescope de tête unique (11) à deux voies optiques (A, B) à trois miroirs asphériques dont deux sont communs aux faisceaux reçus (12, 13) et le troisième (16, 18), (22, 23), (26, 29), (32, 36), (43, 45) (48, 53) est dissocié et appartient à deux parties dédiées chacune à une des deux voies optiques (A, B) du télescope, chacune de ces deux parties comportant au moins un miroir plan (14, 20, 25, 31, 41, 47), (15, 21, 28, 35, 42, 52) dans lequel les deux voies optiques (A, B) ont leurs axes optiques dissociés, les miroirs plans (14, 20, 25, 31, 41, 47), (15, 21, 28, 35, 42, 52) de chaque voie optique étant disposés de façon que, dans le plan image, les deux lignes de détection (8, 10) desdites deux voies optiques soient distinctes, parallèles entre elles, et distantes d'une distance non nulle, comprise entre 0 et la valeur nominale Dn de la distance (e) entre les lignes de détection, telle que Dn= f. B/H, f étant la focale nominale du télescope, B la largeur de la zone du plan objet vue dans le plan image et H la distance entre le plan objet et le dispositif d'imagerie.

2. Dispositif selon la revendication 1, **caractérisé en ce qu'** il comporte sur l'une des deux voies (B), (A) un réducteur de focale (40), (50).

## Patentansprüche

1. Kompakte stereoskopische Bilderzeugungsvorrichtung, die eine optische Bildformungsvorrichtung und eine optoelektronische Erkennungsvorrichtung mit zwei Erkennungslinien umfasst, die in der Bildebene der optischen Vorrichtung angeordnet sind, wobei die optische Vorrichtung ein Einzelkopf-Teleskop (11) mit zwei optischen Kanälen (A, B) mit drei asphärischen Spiegeln hat, von denen zwei den empfangenen Strahlen (12, 13) gemeinsam sind und der dritte (16, 18), (22, 23), (26, 29), (32, 36), (43, 45), (48, 53) getrennt ist und zu zwei Teilen gehört, die jeweils für einen der zwei optischen Kanäle (A, B) des Teleskops dediziert sind, wobei jeder dieser zwei Teile wenigstens einen Planspiegel (14, 20, 25, 31, 41, 47), (15, 21, 28, 35, 42, 52) umfasst, wobei die optischen Achsen der beiden optischen Kanäle (A, B) getrennt sind, wobei die Planspiegel (14, 20, 25, 31, 41, 47), (15, 21, 28, 35, 42, 52) jedes optischen Kanals so angeordnet sind, dass in der Bildebene die zwei Erkennungslinien (8,10) der zwei optischen Kanäle verschieden, parallel zueinander und um eine Distanz von ungleich null im Bereich zwischen 0 und dem Nennwert Dn der Distanz (e) zwischen den Erkennungslinien beabstandet sind, so dass Dn = f. B/H, wobei f die Nominalbrennweite des Teleskops ist, B die Breite der Zone der Objektebene in der Bildebene gesehen ist und H die Distanz zwischen der Objektebene und der Bilderzeugungsvorrichtung ist.

2. Vorrichtung nach Anspruch 1, **dadurch gekennzeichnet, dass** sie einen Brennweitenreduzierer (40), (50) auf einem der beiden Kanäle (B), (A) hat.

## Claims

1. A compact stereoscopic imaging device comprising an optical image-forming device and an optoelectronic detection device having two detection lines disposed in the image plane of the optical device, said optical device comprising a single-head telescope (11) having two optical channels (A, B) with three aspherical mirrors, two of which are common to the received beams (12, 13) and the third (16, 18), (22, 23), (26, 29), (32, 36), (43, 45), (48, 53) of which is dissociated and belongs to two parts, each dedicated to one of the two optical channels (A, B) of the telescope, each of said two parts comprising at least one flat mirror (14, 20, 25, 31, 41, 47), (15, 21, 28, 35, 42, 52), wherein the optical axes of the two optical channels (A, B) are dissociated, the flat mirrors (14, 20, 25, 31, 41, 47), (15, 21, 28, 35, 42, 52) of each optical channel are arranged so that, in the image plane, the two detection lines (8, 10) of said two optical channels are distinct, parallel to each other, and are separated by a non-zero distance, ranging between 0 and the nominal value Dn of the distance (e) between the detection lines, such that Dn = f. B/H, with f being the nominal focal length of the telescope, B being the width of the zone of the object plane seen in the image plane and H being the distance between the object plane and the imaging device.

2. The device according to claim 1, **characterised in that** it comprises a focal length reducer (40), (50) on one of the two channels (B), (A).
